# EUROPEAN PATENT APPLICATION

(11) **EP 2 617 901 A2**
(43) Date of publication of application: **24.07.2013**
(21) Application number: 13151659.3
(22) Date of filing: 17.01.2013
(51) Int. Cl.: E02F 5/08, E02F 9/28

(54) **Trenching device**

(30) Priority: 19.01.2012 NL 1039306; 01.06.2012 NL 2008919
(71) Applicant: Technisch Bureau D. de Breuk B.V., 2407 AD Alphen Aan Den Rijn (NL); De Wit, Willem Roelof, 2471 PK Zwammerdam (NL)
(72) Inventor: De Wit, Willem Roelof, 2471 PK ZWAMMERDAM (NL)
(74) Representative: De Grave-Wolterink, Isabelle

(57) **Abstract**

The present invention relates to a trenching device for digging trenches in a soil surface, preferably a sand surface, in particular a trench device adapted to facilitate the installation of cables such as an optical fiber, and a method of digging a trench wherein use is made of a trenching device. In particular, the trenching device comprises a vehicle body which is movable in a vehicle direction; and a trenching tool; and a mounting structure provided between the vehicle body and the trenching tool. According to the invention, the trenching tool comprises one or more bristles, rotatable by a horizontal drive shaft about a horizontal rotation axis defined by the drive shaft, and wherein the trenching tool is of the type operable to dig a trench by rotating the one or more bristles.

## Description

The present invention relates to a trenching device for digging trenches in a soil surface, preferably a sand surface, and in particular to a trenching device for digging a trench or micro trench adapted to facilitate the installation of a cable, in particular a data carrying cable, such as an optical fiber.

When installing new cable networks, in particular new data cable networks, it is common to install the cables for at least part of the network along a trench. The trench can then be filled in over the cable. This provides protection for the cable and ensures it does not interfere with the passage of persons or vehicles once laid. A trench for laying a cable may be formed by digging and after the cable laying the trench is back filled with the spoil from the digging.

A common trenching device is a chain trencher, which is a machine that drives a chain to dig trenches. Its action is similar to a chain saw and the chain moves around a blade to excavate the soil. They are used for large commercial irrigation projects where digging into hard soil is a problem. The width of the trench needs to be kept to a minimum where a deep trench is required.

Alternatively, excavators are available which is in general a track driven machine, which operates by scooping the soil and depositing it beside the trench. They are used for large commercial irrigation jobs where large pipes will be laid or multiple pipes will be installed in the same trench.

Yet alternatively, trenching devices are available comprising a movable vehicle body, a trenching tool and a mounting structure provided between the vehicle body and the trenching tool. Such known trenching devices are disc or blade trenchers, comprising a saw blade to cut the trench by rotating the saw blade.

The aim of the present invention is to provide yet an alternative trenching device.

According to the invention, the trenching device comprises a vehicle body which is movable in a vehicle direction, a trenching tool and a mounting structure provided between the vehicle body and the trenching tool, wherein the trenching tool comprises one or more bristles, rotatable by a horizontal drive shaft about a horizontal rotation axis defined by the drive shaft, and wherein the trenching tool is of the type operable to dig a trench by rotating the one or more bristles.

An advantage of such a trenching device is that the trenching device and the trenching tool are of a relatively simple construction, allow a high productivity and operate at relatively low costs per meter. A productivity of 3 - 4, or even up to 5 or 6 meters per minute is conceivable. Another advantage is that as a result of using bristles, no further finishing operations on the trench are required.

The trenching device according to the invention is used for digging trenches in a soil surface, preferably a sand surface, in particular a trench device adapted to facilitate the installation of cables such as an optical fiber. The device can be used for making trenches for the purpose of laying cables, pipes, lines, wires and channel/ gutter systems. Trenches include any longitudinal slits or grooves in the soil.

The trenching device is in particular useful for making trenches under a walkway, footpath, sidewalk or a driveway, which is generally laid on top of a sand surface.

A common depth for laying cables, in particular electricity cables and telecommunication cables, is 60 cm. It is now foreseen that this depth may be lower for laying optical fibers, which may be in the order of 15-30 cm, in particular 20 cm. The trenching device according to the present invention is particularly suitable for making such trenches having a depth of 15-30 cm, but deeper such as up to 45 cm, 60 cm or even further is also envisaged.

The trenching tool according to the present invention may be powered mechanically, hydraulically, via a fuel or an electromotor. For example by an electromotor, a heat engine or a pneumatic motor, driving the drive shaft to rotate the bristles. Possibly, the drive shaft and the motor are at remote locations and connected to each other, e.g. via a chain transmission. It is conceivable that the motor is mounted to the mounting structure, or that the motor is mounted to the vehicle body which is movable in a vehicle direction. In a particular embodiment, it is possible to have a configuration in which the trenching tool is hand-driven.

Possibly, the vehicle body and the trenching tool share the same drive means, which may be an electromotor, a heat engine or a pneumatic motor.

Preferably, the trenching device comprises operation means to operate the trenching tool. These operation means can possibly activate the horizontal drive shaft, and regulate the amount of power transmitted to the drive shaft, and the direction of rotation of the drive shaft and thus of the one or more bristles. These operation means may be provided on the movable vehicle body, allowing the person operating the machine to sit or stand on the machine or walk behind the machine. It is also conceivable that the operation means comprise a wireless or cabled control unit allowing operation remote from the machine.

With a trenching tool according to the present invention, the width of the one or more bristles determines the width of the trench being dug by the bristles. A common width of trenches for cable installations is 15-60 cm, in particular 20-40 cm. According to the invention, the powered trenching tool comprises one or more rotatable bristles. Hence, a configuration is conceivable having one bristle of the desired width, or alternatively having multiple bristles provided parallel to each other on the same drive shaft to achieve the desired width. For example, two bristles, each having a width of 20 cm, are used in parallel to dig a trench of 40 cm in width.

In an embodiment, the trenching tool may comprise cutter discs, in addition to the one or more bristles, which are also rotatable by a horizontal drive shaft about a horizontal rotation axis defined by the drive shaft. This is in particular advantageous if the soil in which the trench is to be dug is inappropriate to be dug by a bristle alone. For example, the soil may comprise stabilization material in addition to sand, mud and other soil components. This stabilization material can be dealt with by the cutter discs, while the combination with the bristles ensures that the trenching tool is capable of digging a trench.

In an embodiment, the bristle comprises bristle hairs which are mounted on a hub, which engages on the drive shaft. It is advantageous when the length of the bristle hairs equals or exceeds the depth of the trench to be dug, as in such an embodiment neither the hub nor the drive shaft is lowered into the trench during digging, which prevents damage by such solid mechanical parts. This advantage is achieved until the trenching tool is in a lowered operational position in which the top of the bristle contacts the bottom of the dug trench. In such an embodiment, the depth of the trench is thus limited by the length of the bristle hairs. Possibly, the cutter discs are also mounted on the hub which engages on the drive shaft.

It is conceivable that a trenching device according to the invention comprises multiple trenching tools, rotatable about parallel but remote horizontal drive shafts. As such, it is possible to first dig a trench of a first depth by a first trenching tool, and subsequently deepen the trench to a second, deeper depth by a second trenching tool of enlarged diameter.

In an embodiment, the circular peripheral surface formed by bristle, in particular the top of the bristle hairs, is a flat surface, as a result of which a trench can be dug having a bottom that is relatively flat, level. This is advantageous if a gutter or cable conduit or the like is being positioned in the trench, e.g. to guide the cables, because the flat bottom enables an even pressure load of the gutter. Alternative configurations of the top of the bristle hairs are also conceivable.

In an embodiment, the bristles are made of a synthetic material. This is advantageous as this will reduce or even prevent digging damages, in particular when compared to the damages occurring when using solid metal trenching tools such as cutting blades or chain trenchers. On the other hand, it is also conceivable that metal bristles are used for particular hard surfaces.

It is conceivable that multiple type of bristles are available. In a possible embodiment, the bristle of the trenching tool can be removed and replaced, preferably in an easy manner. Accordingly, the operator can switch bristles as desired. For example when a different depth of the trench is desired, and/ or when the trench is to be dug in a different type of soil, the bristles may be switched to bristles made from a different material or bristles having a different bristle hair length.

The trenching device comprises a vehicle body which is movable in a vehicle direction. It is both possible that the trenching tool is mounted in a forward direction or a rearward direction (seen in the vehicle direction) relative to this vehicle body. In addition, it is both possible that the trenching tool is rotatable in the vehicle direction, and in the opposite direction. In a preferred embodiment, the trenching tool is provided in a forward vehicle direction with respect to the vehicle body and rotates in the same direction.

When rotating the one or more bristles, soil is dug by the bristles and moved upwards in the direction or rotation of the bristles. In particular, when the trenching tool is allowed to rotate in the vehicle direction, the soil is moved upwards in the opposite direction. The angle of upward movement of the soil is dependent on the distance between the top of the bristle and the drive shaft. For adequate removal of the upwardly moved soil, a radius of 10-40 cm, more preferably 15-30 cm between the top of the bristle and the drive shaft is preferred.

According to a possible embodiment of the invention, the trenching device further comprises a soil discharge, provided adjacent the trenching tool, arranged for discharging soil being moved upwards by the bristles.

The soil discharge preferably comprises a collection unit, provided behind the trench cutting apparatus, in particular between 180° and 320° of the rotation circle described by the one or more bristles of the trenching tool in order to adequately be able to collect the soil being moved upwards by the bristles.

The soil collection unit may be a tumble unit, such that amounts of soil can be tumbled from the collection unit, e.g. to a location adjacent the trench.

Preferably, the soil discharge further comprises a transport device in the collection unit and a discharge opening in the soil collection unit. Possibly the discharge opening is provided at a side of the trenching device, to be able to discharge soil from the collection unit adjacent the trench. This is beneficial as after installation of the cable, the trench needs to be closed again. Possibly, the soil collection unit is mounted to the mounting structure. It is also conceivable that the soil collection unit is mounted to the vehicle body, or that the soil collection unit is a self-supporting unit.

Commonly, soil, and in particular sand, is wet and tends to stick to the surface it comes in contact with. Hence, the soil being moved upwards by the bristle, collected by the soil discharge, will partly stick to the collection unit.

It is preferred to provide one or more Archimedes' screws in the collection unit. To remove this soil from the collection unit, it is preferred to provide a transport device capable of removing this stuck soil from the collection unit. This is advantageous as this prevents the stuck soil from obstructing the discharge of soil. Possibly, at least two interacting Archimedes' screws are provided. One Archimedes screw is positioned at the region of the collection unit where the soil is moved up towards, to scrape off the soil stuck to the collection unit, and one or more other screws to which the scraped off soil is dispatched. By providing interacting Archimedes' screws, the blades of which rotate within one another, the Archimedes' screws remain relatively clean and will not get obstructed by soil stuck to the blades of one of the screws. Alternatively, the transport device may comprise one or more conveyor belts, e.g. comprising scrapers.

Possibly, the soil discharge comprises a transport device to discharge soil being moved upwards by the bristles. It is conceivable that the transport device is positioned such that soil, falling back on the ground due to gravity after being moved upwards by the bristles, is collected and transported by the transport device. It is preferred to provide a combination of a collection unit and a transport device, e.g. comprising a conveyor. As such, it is possible for the soil discharge to dose an amount of the soil directly to a location adjacent the trench, and to collect the remaining amount of soil. It is also conceivable that all soil is directly transported to a location adjacent the trench, or that the entire amount of soil dug from the trench is collected.

By providing the transport device movably with respect to the collection unit, e.g. the discharge opening of the collection unit, the amount of soil being transported away can be regulated.

The movable vehicle body is possibly a stable and self supporting vehicle body, which may be a tracked or wheeled vehicle, e.g. provided with a caterpillar track. The vehicle may be an adapted digger or tractor vehicle. Preferably, the vehicle body is powered, e.g. by an electromotor, a heat engine or a pneumatic motor. It is also conceivable that the movable vehicle body is movable by hand force. The vehicle may be small, e.g. allowing an operator to walk behind the vehicle. The movable vehicle body can also be adapted such that it may carry an operator. In a possible embodiment, the width of the movable vehicle body is kept small, in particular smaller than 90 cm, to be able to use the trenching device on footpaths and sidewalks.

The mounting structure is provided between the vehicle body and the trenching tool. Preferably, the mounting structure engages on the drive shaft of the trenching tool. Preferably, this is a movable mounting structure such that the trenching tool can be moved relative to the vehicle body. Possibly, such movement is a rotational movement of the trenching tool, such as between a raised operational position in which a top of the bristle contacts the soil surface at a position at the top of a trench to be dug, and a lowered operational position in which the top of the bristle contacts the bottom of the dug trench. Preferably, the trenching device comprises operation means to actively operate the mounting structure.

In a possible embodiment, the mounting structure can be moved to a position wherein the trenching tool is in a stowed, non-operational position, remote from the soil surface. This is advantageous when positioning the trenching device. Advantageously, the centre of gravity of the trenching device in this stowed position is in the vehicle body.

Possibly, the mounting structure is operable to move the trenching tool laterally and/ or longitudinally with respect to the vehicle body, e.g. via a rail construction.

In a possible embodiment, the mounting structure comprises a housing for the trenching tool. This housing may comprise a stop surface which contacts the soil surface adjacent the trench, when the trenching tool is in its lowermost lowered operation position in which the top of the bristle contacts the bottom of the dug trench. In this lowermost lowered operation position the depth of the dug trench is the desired depth of the trench, the stop surface of the housing prevents the trenching device from digging further. Possibly, the relative position of the trenching tool and the housing is variable. As such, the depth of the trench to be dug may be limited.

The mounting structure, which is possibly movable, may be allowed to move passively, hence, the mounting structure allows the bristles to move to a lower position once the soil is removed, as a result of gravity. Alternatively, it is also conceivable that the mounting structure allows active positioning of the trenching tool, e.g. when moving from a stowed, non-operational position to an operational position in which a top of the bristle contacts the soil surface, e.g. by hydraulic arms. It is also conceivable that operating the mounting structure may contribute to the pressure exerted by the trenching tool on the soil, which may contribute to the productivity of the trenching device. The movement of the mounting structure may e.g. be powered by one or more power sources provided on the vehicle.

The invention can be summarized as follows:

A machine/ apparatus with which by means of a moving/ rotatable bristle soil and sand can be dug.

A machine/ apparatus with which by means of a moving/ rotatable bristle trenches can be dug.

The invention is directed to an installation or an assembled installation placed on a caterpillar track or a wheeled track, for making trenches for the purpose of laying cables, pipes, lines, wiring and channel/ gutter systems.

The dimensions of the frame and the installation placed on top of it is not strictly defined and can be adapted to the scale of the activities and the requirements laid down thereby.

Digging takes place by means of rotatable brushes/bristles; by using one or more coupled bristles the width of the trench to be dug can be adjusted.

The bristles can be replaced, depending on the condition/ composition of the soil harder or softer bristles can be applied.

Via a transport device mounted on or to the frame the dug soil or sand can be transported directly to a collection bin or dumped adjacent the trench/ slit/ groove. It is also possible to simultaneously deposit a portion adjacent the trench/ slit and in the collection unit by means of a dosage installation.

A collection unit/ bin placed on the frame can be realized in a fixed configuration or a tipping configuration (both rearwards and sideways).

Operation of the machine can be realized in various ways: on the machine allowing the person operating the machine to sit or stand on the machine or walk behind the machine.

Operation can also be realized with a wireless or cabled control unit allowing operation remote from the machine.

Powering of the machine can take place mechanically, hydraulically, via a fuel or an electromotor.

The invention is further elucidated in relation to the drawings, in which:
Fig. 1 shows a schematical side view of a trenching device according to the present invention;
Fig. 2a shows a schematical front view of the trenching device of fig. 1, including a conveyor belt;
Fig. 2b shows a schematical side view of a trenching device according to fig. 1, including a conveyor belt;
Fig. 3 shows a schematical side view of a trenching device according to fig. 1, including shielding means;
Figs. 4a-4d shows a schematical side view of an alternative trenching device according to the present invention;
Figs. 5a-5d show different views of a guide system for a trenching device according to the invention.

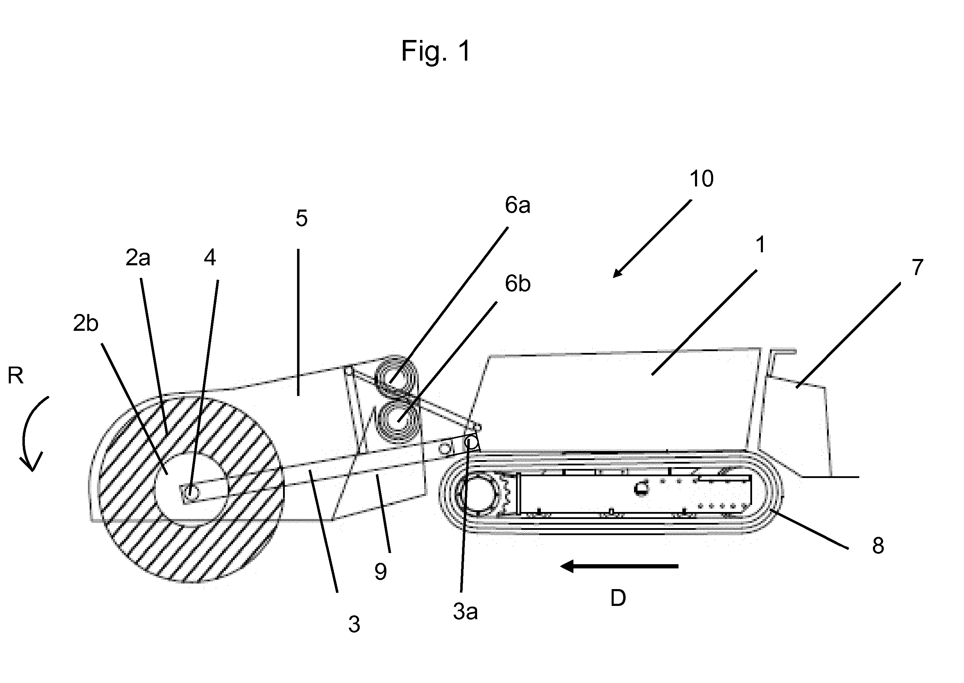

In fig. 1 a schematical side view of a trenching device 10 according to the present invention is shown. The trenching device 10 comprises a vehicle body 1, which in the shown embodiment is movable in a vehicle direction D. The vehicle body 1 is provided with a caterpillar track 8. An operator part 7 is provided behind which an operator can walk, and in which operation means for operating the trenching device, are provided.

A trenching tool is provided which comprises bristle hairs 2a which are mounted on a hub 2b, which is mounted on a drive shaft 4. In the shown embodiment, the trenching tool 2 is allowed to rotate in a forward direction R, corresponding to the vehicle direction D. The drive shaft 4 is connected via mounting structure 3 to the vehicle body 1. In the shown embodiment, the mounting structure 3 is movable, in particular rotatable, allowing the trenching tool 2 to move with respect to the vehicle body 1. The mounting structure is provided with a bracket 3a to connect the mounting structure to the vehicle body 1.

The mounting structure 3 of the shown embodiment comprises a housing 5, which is large enough to house drive means of the trenching tool, hence, when a powered trenching tool 2 is used, its drive means may in this embodiment be provided in the housing 5 of the mounting structure 3.

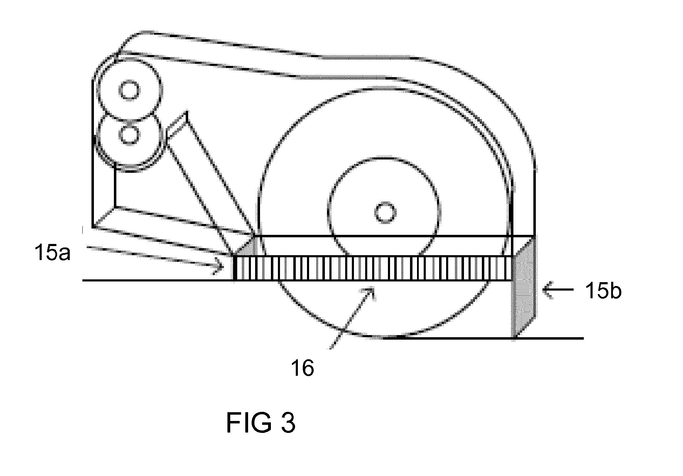

The housing may also function as shielding device, provided adjacent the trenching tool, to prevent spluttering and or blowing of soil and small particles adjacent the trenching tool during digging the trench. In addition to the housing 5, it is possible to provide further shielding means such as a rubber skirt 16 and/ or flaps 5a and/or 6b extending below the housing 5, as is visible in fig. 3.

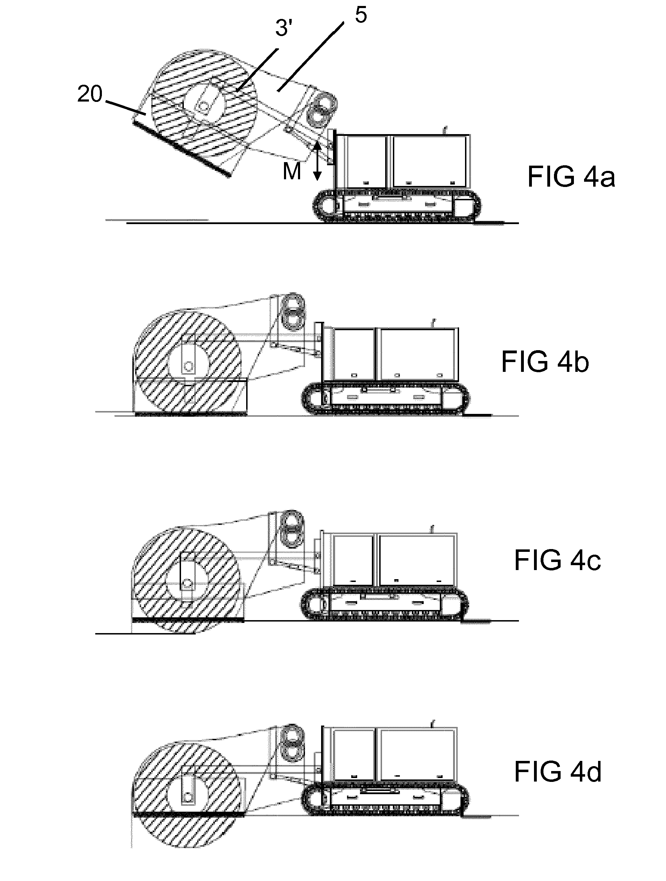

Alternatively, it is also conceivable that a shielding device 20 is provided, which is movable with respect to the trenching tool, in particular the drive shaft 4 of the trenching tool. In the embodiment as shown in figs. 4a-4d, similar to the embodiment of fig. 1, the drive shaft 4 is connected to a mounting structure 3', which comprises a housing 5. In this embodiment, the shielding device is mounted movable with respect to the housing 5. The operation is visible in figs. 4a-4d. From these drawings, it can be discerned that in this embodiment the mounting structure 3' is not rotatable with respect to the vehicle body 1, but instead movable in a linear vertical movement M.

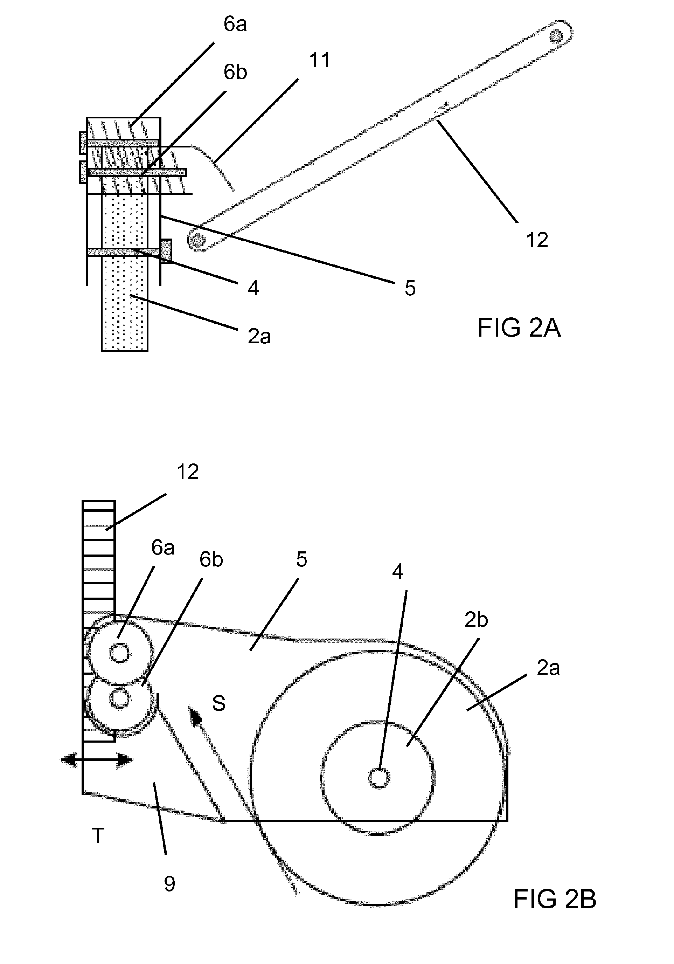

As a result of the forward rotation R of the trenching tool 2, soil is thrown upwards by the trenching tool 2 in the direction S (visible in fig. 2b) of the vehicle body 1. As is preferred, a soil discharge is provided. In this embodiment, the housing 5 of the mounting unit comprises a soil collection unit 9 in which a transport device 6 is provided, for collecting and discharging soil being tossed up by the bristles of the trenching tool. As is also visible in fig. 2, the transport device 6 comprises two interacting Archimedes' screws 6a and 6b. The upper screw 6a scrapes off soil which gets stuck to the upper region of the collection unit, and transports this soil to the lower Archimedes screw 6b. This lower Archimedes' screw extends though a discharge opening in the collection unit, which opening is shielded by a soil shield 11.

The soil discharged by the discharge opening of the collection unit can be dicharged further by a conveyor belt 12. This conveyor belt 12 is here provided movably in a direction T with respect to the collection unit 9, in particular the discharge opening of the collection unit, as a result of which the amount of soil being discharged is variable.

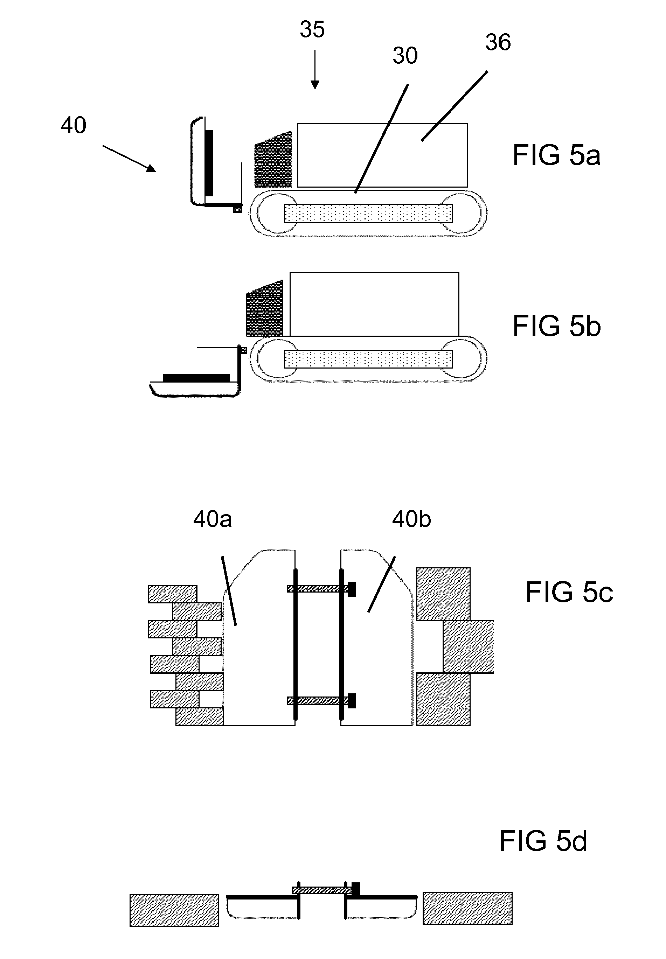

In figs. 5a-5d a guide system 40 for a trenching device 35 comprising a vehicle body 36 having two parallel caterpillar tracks 30 is shown. In figs. 5a and 5b the trenching device 35 with guide system 40 is shown in a side view, wherein in fig. 5a the guide system is rotated upwards, away from the soil surface. This position is beneficial for transport purposes. In fig. 5b an operational position is shown, in which the guide system is capable of guiding the vehicle body 36 in the right direction. Preferably, the caterpillar tracks 30 of the vehicle body 36 are operable independently, as a result of which the rotation time of each caterpillar may vary and the drive direction can be adjusted.

The guiding system 40 comprises two guides 40a and 40b, which mutual distance is adjustable to be able to use the system for different widths of trenches. These guides 40a and 40b comprise preferably rigid plates or beams of a length capable of contacting multiple clinkers, paving stones or the like.

As such, in operation, first the clinkers, paving stones or the like under which the trench is to be dug are removed, exposing the soil surface in which the trench is to be dug. Then the trenching device is positioned on the soil surface, with the guiding device in the operational position as shown in fig. 5b. The distance between the guides 40a and 40b is set, such that both guides contact the edges of the remaining, not removed, clinkers, paving stones or the like. Then the vehicle body is allowed to move in a vehicle direction, which is adjustable when forced to do so by the guide plates.

## Claims

1. Trenching device for digging trenches in a soil surface, preferably a sand surface, in particular a trench device adapted to facilitate the installation of cables such as an optical fiber, the trenching device comprising:
- a vehicle body which is movable in a vehicle direction; and
- a trenching tool;
- a mounting structure provided between the vehicle body and the trenching tool,
**characterized in that**
the trenching tool comprises one or more bristles, rotatable by a horizontal drive shaft about a horizontal rotation axis defined by the drive shaft, and wherein the trenching tool is of the type operable to dig a trench by rotating the one or more bristles.

2. Trenching device according to claim 1, suitable for making trenches having a width of 15-60 cm, in particular 20-40 cm.

3. Trenching device according to claim 1 or 2, wherein the trenching device further comprises a soil discharge, provided adjacent the trenching tool, arranged for discharging soil generated during the digging of the trench.

4. Trenching device according to claim 3, wherein the soil discharge comprises a soil collection unit, a transport device in the soil collection unit and a discharge opening in the soil collection unit.

5. Trenching device according to claim 3 or 4, wherein the soil discharge comprises one or more Archimedes' screws to discharge the soil.

6. Trenching device according to one or more of claims 3-5, wherein the soil discharge discharges all or part of the soil to a location adjacent the trench, and possibly collects the remaining part of the soil.

7. Trenching device according to one or more of the preceding claims, wherein the trenching tool also comprises cutter discs, rotatable by a horizontal drive shaft about a horizontal rotation axis defined by the drive shaft.

8. Trenching device according to one or more of the preceding claims, wherein a bristle comprises bristle hairs which are mounted on a hub, which engages on the drive shaft, wherein preferably the length of the bristle hairs equals or exceeds the depth of the trench to be dug.

9. Trenching device according to claims 7 and 8, wherein the cutter discs are mounted on the hub, which engages on the drive shaft.

10. Trenching device according to one or more of the preceding claims, suitable for making trenches having a depth of 15-60 cm.

11. Trenching device according to one or more of the preceding claims, wherein the mounting structure engages on the drive shaft of the trenching tool, and wherein preferably the mounting structure is movable such that the trenching tool can be moved relative to the vehicle body, such as between a raised operational position in which a top of the bristle contacts the soil surface at a position at the top of a trench to be dug, and a lowered operational position in which the top of the bristle contacts the bottom of the dug trench.

12. Trenching device according to one or more of the preceding claims, further comprising a shielding device provided adjacent the trenching tool, in particular adjacent the soil surface, to prevent spluttering and or blowing of small particles adjacent the trenching tool during digging the trench.

13. Method of digging a trench wherein use is made of a trenching device according to one or more of the preceding claims, comprising the steps of:
- positioning the vehicle body on the soil surface in which the trench is to be cut;
- positioning the trenching tool on the soil surface in which the trench is to be cut;
- driving the trenching tool to rotate the one or more bristles;
- moving the vehicle body across the surface so as to move the trenching tool across said surface so as to dig the trench along a desired route.

14. Method of laying a cable comprising the steps of digging a trench according to claim 13; placing a cable in the trench; and filling the trench.

15. Method according to claim 14, wherein the method includes the step of placing a cable conduit in the trench.
